# EUROPEAN PATENT APPLICATION

(11) **EP 2 315 450 A2**
(43) Date of publication of application: **27.04.2011**
(21) Application number: 10164355.9
(22) Date of filing: 28.05.2010
(51) Int. Cl.: H04N 13/00

(54) **2D/3D display apparatus and 2D/3D image display method therein**

(30) Priority: 23.10.2009 KR 20090101324
(71) Applicant: Samsung Electronics Co., Ltd., Suwon-si, Gyeonggi-do (KR)
(72) Inventor: Choo, Jin-ho, Gyeonggi-do (KR); Lee, Jong-whan, Gyeonggi-do (KR)
(74) Representative: Hewett, Jonathan Michael Richard

(57) **Abstract**

A display apparatus which can simultaneously display a plurality of images such as a two-dimensional image or a three-dimensional image, and an image display method therein, the display apparatus including: a signal receiving part which receives a first image signal; an image processing part which generates a second image signal and a third image signal based on the first image signal; a display part which displays images based on the second and third image signals; and a controller which controls the image processing part to generate the second and third image signals, to display the image based on the second image signal in a first region of the display part, and to display the image based on the third image signal in a second region of the display part, the third image signal including a left-eye image and a right-eye image generated from the first image signal.

## Description

The present invention relates to a display apparatus which can simultaneously display a plurality of images such as a two-dimensional image or a three-dimensional image, and an image display method therein.

In general, the outside world is seen by human eyes in three dimensions having widths, lengths and heights. A one-dimensional image and a two-dimensional (2D) image have no significant difference therebetween to human eyes. However, a three-dimensional (3D) image is significantly different to human eyes as compared to the one- and two-dimensional images.

Recently, 3D image display technologies have been actively developed and commercialized in the field of photography, films, televisions, television games, or the like. Generally, the 3D image display technologies provide a stereoscopic effect using a binocular parallax, which is a major factor in producing the stereoscopic effect in a short distance.

There are two viewing types for a stereoscopic image, that is, a glasses type and a non-glasses type. The glasses type uses shutter glasses or polarized glasses to view the stereoscopic image.

Meanwhile, users may have different preferences between the 2D image and the 3D image. For example, certain users who are not accustomed to the 3D image may prefer the 2D image because they feel a vertigo effect while viewing the 3D image, whereas other users who are accustomed to the 3D image may prefer the 3D images because they feel that the 2D image is monotonous. Further, certain users who are accustomed to the 3D image may prefer a specific 3D image, for example, having a depth characteristic. In these cases, a display apparatus which provides either of the 2D image or the 3D image can not satisfy a variety of preferences of users. Accordingly, it is an aspect of the exemplary embodiments to provide a display apparatus which can simultaneously display a two-dimensional (2D) image and a three-dimensional (3D) image, and an image display method therein.

Another aspect of the exemplary embodiments is to provide a display apparatus which can simultaneously display a plurality of 3D images having different attributes.

Additional aspects of the exemplary embodiments will be set forth in part in the description which follows and, in part, will be obvious from the description, or may be learned by practice of the exemplary embodiments.

According to an aspect of an exemplary embodiment, there is provided: a display apparatus including: a signal receiving part which receives a first image signal; an image processing part which generates a second image signal and a third image signal based on the received first image signal, and which processes the second and the third image signals to be displayed; a display part which displays images respectively based on the second and third image signals processed in the image processing part; and a controller which controls the image processing part to generate the second and the third image signals, to display the image based on the second image signal in a first region of the display part, and to display the image based on the third image signal in a second region of the display part, the third image signal including a first left-eye image and a first right-eye image generated on the basis of the first image signal, and the image based on the third image signal being displayed in a 3D mode.

The controller may control the image processing part, if the first image signal is a 2D image signal, so that the first image signal is converted into 3D to generate the third image signal, and so that the image based on the second image signal is displayed in a 2D mode.

The controller may control the image processing part, if the first image signal is a 3D image signal including a second left-eye image and a second right-eye image, so that the second image signal is generated on the basis of the second left-eye image or the second right-eye image, and the image based on the second image signal is displayed in the 2D mode.

The controller may control the image processing part so that the second image signal includes a third left-eye image and a third right-eye image, the image based on the second image signal is displayed in the 3D mode, and an alternating display order of the third left-eye image and the third right-eye image is opposite to an alternating display order of the first left-eye image and the first right-eye image.

The controller may control the image processing part so that the second image signal includes a third left-eye image and a third right-eye image, the image based on the second image signal is displayed in the 3D mode, and the image based on the second image signal and the image based on the third image signal have different stereoscopic effects.

Depth information corresponding to the second image signal may be different from depth information corresponding to the third image signal.

The 3D mode may correspond to a viewing mode using shutter glasses or polarized glasses.

The controller may control the image processing part so that the second image signal includes a third left-eye image and a third right-eye image, the image based on the second image signal is displayed in the 3D mode, and wherein the 3D mode of the image based on the second image signal corresponds to a glasses type, and the 3D mode of the image based on the third image signal corresponds to a non-glasses type.

The controller may control the image processing part so that the second image signal includes a third left-eye image and a third right-eye image, the image based on the second image signal is displayed in the 3D mode, and wherein the 3D mode of the image based on the second image signal corresponds to a viewing mode using shutter glasses and the 3D mode of the image based on the third image signal corresponds to a viewing mode using polarized glasses.

The controller may control the image processing part so that the image based on the second image signal is displayed in a Picture In Picture (PIP) mode, a Picture Out Picture (POP) mode, or a Picture By Picture (PBP) mode.

The controller may control the image processing part so that the image based on the third image signal is displayed in a PIP mode, a POP mode, or a PBP mode.

According to an aspect of another exemplary embodiment, there is provided an image display method for a display apparatus, the method including: receiving a first image signal; generating a second image signal and a third image signal based on the received first image signal and processing the generated second image signal and the generated third image signal to be displayed in a display part; and displaying an image based on the second image signal in a first region of the display part, and displaying an image based on the third image signal including a first left-eye image and a first right-eye image in a second region of the display part in a 3D mode.

If the first image signal is a 2D image signal, the first image signal may be converted into 3D to generate the third image signal, and wherein the image based on the second image signal may be displayed in a 2D mode.

If the first image signal may be a 3D image signal including a second left-eye image and a second right-eye image, the second image may be generated on the basis of the second left-eye image or the second right-eye image, and the image based on the second image signal may be displayed in a 2D mode.

The second image signal may include a third left-eye image and a third right-eye image, the image based on the second image signal may be displayed in the 3D mode, and an alternating display order of the third left-eye image and the third right-eye image may be opposite to an alternating display order of the first left-eye image and the first right-eye image.

The second image signal may include a third left-eye image and a third right-eye image, the image based on the second image signal may be displayed in the 3D mode, and the image based on the second image signal and the image based on the third image signal may have different stereoscopic effects.

Depth information corresponding to the second image signal may be different from depth information corresponding to the third image signal.

The 3D mode may correspond to a viewing mode using shutter glasses or polarized glasses.

The second image signal may include a third left-eye image and a third right-eye image and the image based on the second image signal may be displayed in the 3D mode, and wherein the 3D mode of the image based on the second image signal corresponds to a glasses type viewing mode and the 3D mode of the image based on the third image signal corresponds to a non-glasses type viewing mode.

The second image signal may include a third left-eye image and a third right-eye image and the image based on the second image signal may be displayed in the 3D mode, and wherein the 3D mode of the image based on the second image signal corresponds to a viewing mode using shutter glasses and the 3D mode of the image based on the third image signal corresponds to a viewing mode using polarized glasses.

The image based on the second image signal may be displayed in a PIP mode, a POP mode, or a PBP mode.

The image based on the third image signal may be displayed in a PIP mode, a POP mode, or a PBP mode.

According to an aspect of another exemplary embodiment, there is provided a display apparatus including: a first signal receiving part which receives a first image signal; a second signal receiving part which receives a second image signal; an image processing part which processes the received first image signal and the received second image signal to be displayed; a display part which displays images respectively based on the first image signal and the second image signal processed in the image processing part; and a controller which controls the image processing part to display a first image based on the first image signal in a first region of the display part and to display a second image based on the second image signal in a second region of the display part, the first image being displayed in the first region in a 3D mode and including a left-eye image and a right-eye image.

According to an aspect of still another exemplary embodiment, there is provided an image display method in a display apparatus, the method including: receiving a first image signal and a second image signal, the first image signal including a left-eye image and a right-eye image; processing the received first image signal and the received second image signal to be displayed in a display part; and displaying an image based on the first image signal in a 3D mode in a first region of the display part, and displaying an image based on the second image signal in a second region of the display part.

The first image signal may include a broadcast signal.

The first image signal may include a signal transmitted from an external device by the HDMI 1.4 specification.

According to exemplary embodiments, a 2D image and a 3D image can be simultaneously displayed, and a plurality of 3D images having different attributes can be simultaneously displayed, to thereby satisfy a variety of user preferences.

The above and/or other aspects will become apparent and more readily appreciated from the following description of the exemplary embodiments, taken in conjunction with the accompanying drawings, in which:
FIG. 1 illustrates a configuration of a display apparatus according to an exemplary embodiment;
FIG. 2 illustrates a state that images are displayed in a display apparatus according to an exemplary embodiment;
FIG. 3A illustrates left-eye images and right-eye images which are displayed in a display apparatus according to an exemplary embodiment, in the case of using shutter glasses;
FIG. 3B illustrates left-eye images and right-eye images which are displayed in a display apparatus according to an exemplary embodiment, in the case of using polarized glasses;
FIG. 3C illustrates left-eye images and right-eye images which are displayed in a display apparatus according to an exemplary embodiment, in the case of using no stereoscopic glasses;
FIG. 4 illustrates a display of three-dimensional images having different depth information in a display apparatus according to an exemplary embodiment;
FIG. 5 illustrates a case that display orders of left-eye images and right-eye images in a main screen and a sub screen are different from each other, in a display apparatus according to an exemplary embodiment;
FIG. 6 illustrates a configuration of a display apparatus according to another exemplary embodiment;
FIG. 7 illustrates a state that images are displayed in a display apparatus according to another exemplary embodiment;
FIG. 8 is a flowchart illustrating an operational process of a display apparatus according to an exemplary embodiment; and
FIG. 9 is a flowchart illustrating an operational process of a display apparatus according to another exemplary embodiment.

Reference will now be made in detail to the exemplary embodiments, examples of which are illustrated in the accompanying drawings, wherein like reference numerals refer to like elements throughout. The exemplary embodiments are described below so as to explain the present invention by referring to the figures. Redundant description to different exemplary embodiments may be omitted for simplicity of description.

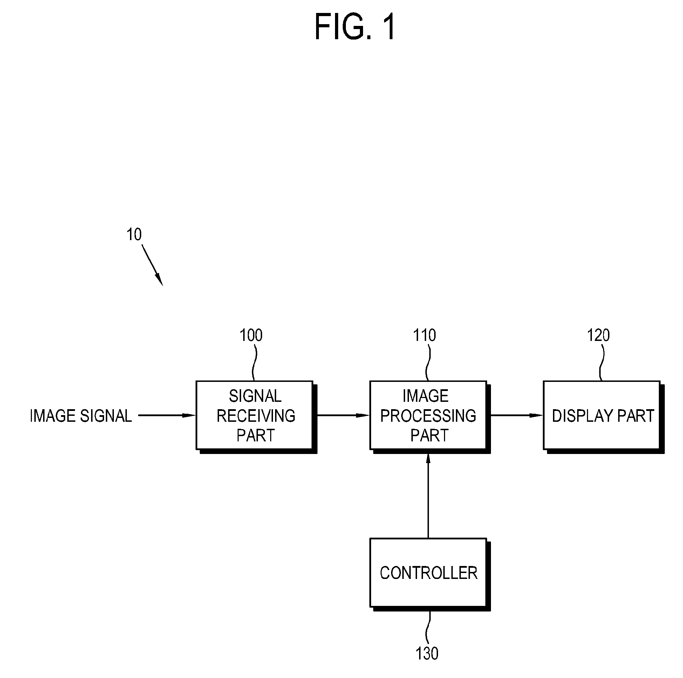

FIG. 1 illustrates a configuration of a display apparatus 10 according to an exemplary embodiment. Referring to FIG. 1, the display apparatus 10 includes a signal receiving part 100, an image processing part 110, a display part 120 and a controller 130.

The signal receiving part 100 may receive a single image signal or a plurality of image signals. The image signal includes a 2D image signal for display of a 2D image or a 3D image signal for display of a 3D image.

The image processing part 110 processes the image signal received in the signal receiving part 100 to be displayed. Further, the image processing part 110 may convert a 2D image signal into a 3D image signal, and a 3D image signal into a 2D image signal. For example, if the signal receiving part 100 receives a left-eye image and a right-eye image for display of a 3D image, the image processing part 110 may process only the right-eye image, and thus, a 2D image can be displayed using the 3D image signal.

If the signal receiving part 100 receives a single 2D image signal, the image processing part 110 may convert the received 2D image signal to generate a 3D image signal. Furthermore, if the received image signal is a 3D image signal, the image processing part 110 may convert the received 3D image signal to generate a 2D image signal. In addition, in the case that one image signal is received, the image processing part 110 may perform processing so that an image based on the received image signal and an image based on a converted image signal are displayed.

The display part 120 displays images on a screen on the basis of the image signal processed in the image processing part 110.

The controller 130 controls the image processing part 110 to display a variety of images. That is, the controller 130 controls the image processing part 110 to convert the 2D image signal and the 3D image signal, or to convert an attribute of the 3D image signal, to be displayed.

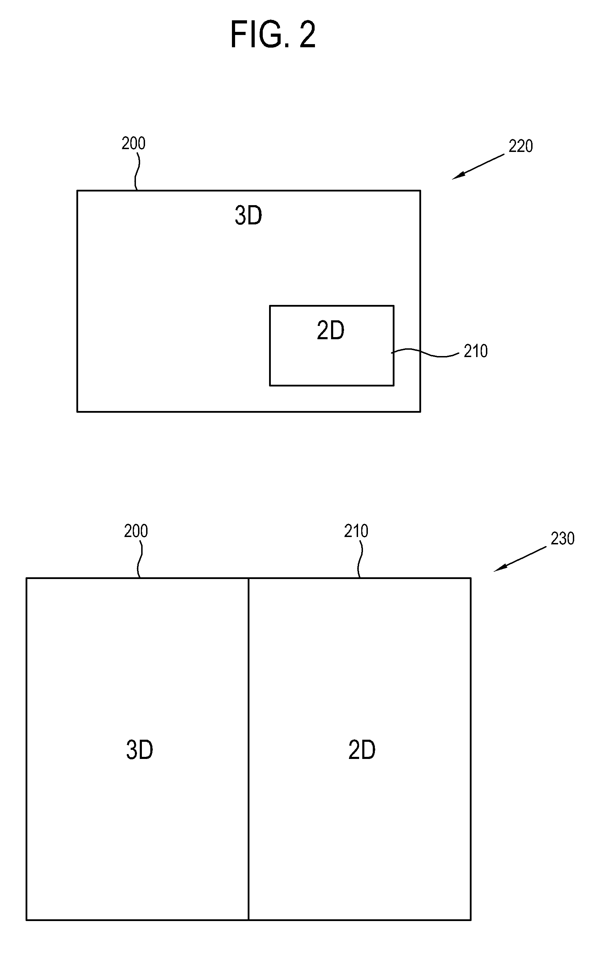

FIG. 2 illustrates a state that images are displayed in the display apparatus 10 according to an exemplary embodiment. The display apparatus 10 according to the present exemplary embodiment may display a plurality of images at the same time, for example, in a Picture In Picture (PIP) mode, a Picture Out Picture (POP) mode, or a Picture By Picture (PBP) mode. As shown in FIG. 2, a PIP screen 220 includes a large main screen 200 and a small sub screen 210 arranged inside of the main screen 200, which are simultaneously displayed. A POP screen (not shown) includes a main screen (not shown) and a sub screen (not shown) arranged outside of the main screen 200, which are simultaneously displayed. A PBP screen 230 includes two split screens, that is, a main screen 200 and a sub screen 210 having the same size, which are simultaneously displayed. The display apparatus 10 may simultaneously display, for example, a 2D image on the main screen 200 and a 3D image on the sub screen 210, and vice versa.

For example, if a plurality of 2D image signals is received, a part of the 2D image signals may be converted into a 3D image signal, and images based on the remaining 2D image signal and the converted 3D image signal may be simultaneously displayed. Further, if a plurality of 3D image signals is received, a part of the 3D image signals may be converted into a 2D image signal, and images based on the remaining 3D image signal and the converted 2D image signal may be simultaneously displayed. Further, 3D images having different attributes may be displayed on the main screen 200 and the sub screen 210, respectively, so that a user can select his or her preferred image. Here, the different attributes in the 3D images may refer to difference in depth between the 3D images or difference in display order between the 3D images, which will be described in more detail hereinafter.

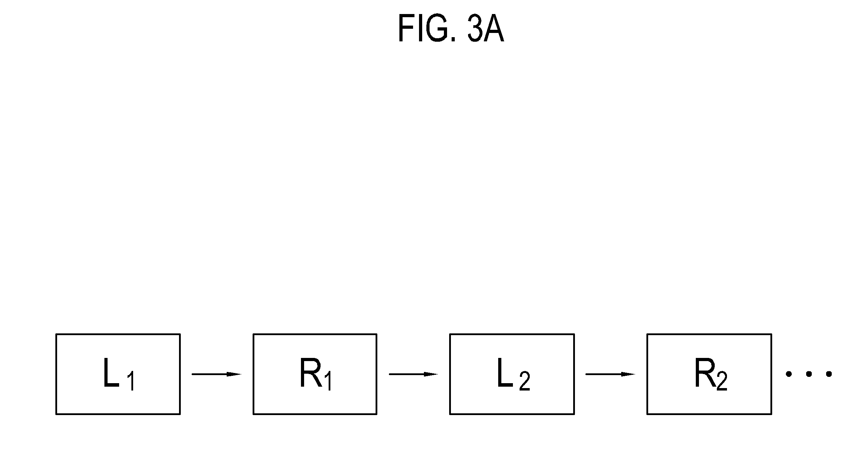

FIG. 3A illustrates left-eye images and right-eye images displayed in the display apparatus 10 according to an exemplary embodiment, in the case of using shutter glasses. A stereoscopic image is obtained by displaying the left-eye images and the right-eye images. To this end, the left-eye images and the right-eye images may be alternately displayed in the order of a first left-eye image L1, a first right-eye image R1, a second left-eye image L2, a second right-eye image R2, and so on. Such a display order of the left-eye images and the right-eye images is suitable for viewing a stereoscopic image through the shutter glasses. The shutter glasses operate in synchronization with images displayed in the display apparatus 10. For example, if a left-eye image is displayed, a left-eye shutter of the shutter glasses is opened and a right-eye shutter thereof is closed. Similarly, if a right-eye image is displayed, the right-eye shutter is opened and the left-eye shutter is closed. Through repetition of these processes, a user can view a stereoscopic image from the images displayed in the display apparatus.

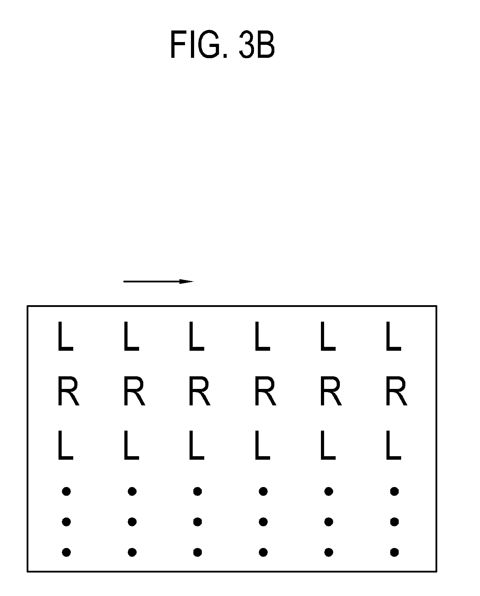

FIG. 3B illustrates left-eye images and right-eye images displayed in the display apparatus 10 according to an exemplary embodiment, in the case of using polarized glasses.

When viewing a stereoscopic image through the polarized glasses, the display apparatus 10 displays left-eye images and right-eye images in rows. For example, in the case the a single screen is formed of a plurality of image rows, left-eye images L may be displayed in odd rows and right-eye images R may be displayed in even rows. Here, the display order of the left-eye images L and right-eye images R may be different in another exemplary embodiment. The stereoscopic image which is viewed through the polarized glasses has different polarizations between the left-eye images and the right-eye images. Thus, when a user views the left-eye images and the right-eye images through the polarized glasses having different polarizing plates, the left-eye images and the right-eye images are separately viewed, to thereby provide the stereoscopic image.

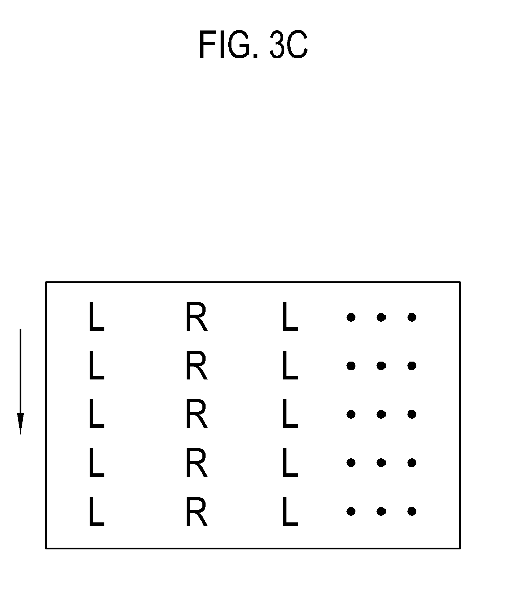

FIG. 3C illustrates left-eye images and right-eye images displayed in the display apparatus 10 according to an exemplary embodiment, in the case of no stereoscopic glasses.

In this respect, a non-glasses type refers to viewing a stereoscopic image without stereoscopic glasses. In this case, there are provided elements for splitting left-eye images and right-eye images in front of a screen on which the images are displayed. A user can view the left-eye images with a left eye and the right-eye images with a right eye, to thereby feel a stereoscopic image. The non-glasses type may include a parallax barrier type, a lenticular type, or the like. In the case of the non-glasses type, the left-eye images and the right-eye images are displayed in columns. For example, in the case that a screen is formed of a plurality of image columns, left-eye images L may be displayed in odd columns and right-eye images R may be displayed in even columns. The display order may be different in another exemplary embodiment.

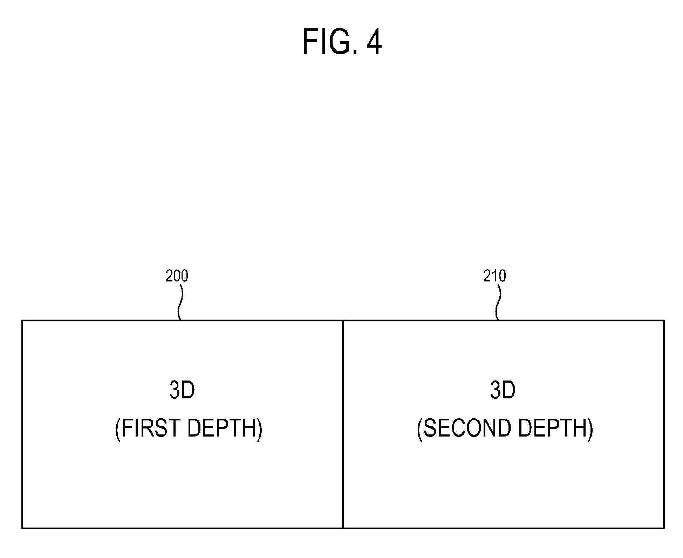

FIG. 4 illustrates a display of 3D images having different depth information in the display apparatus 10 according to an exemplary embodiment. 3D images using the binocular parallax has a characteristic that a stereoscopic effect and a comfort conflict with each other. Further, since a mechanism for recognizing a stereoscopic image is quite complex, even images having the same depth may provide different stereoscopic effects and comforts. Thus, if a user has a selection for depths of 3D images, the user can comfortably enjoy his or her preferred stereoscopic effect. To this end, the display apparatus 10 according to the preset exemplary embodiment may display 3D images having different depths on the main screen 200 and the sub screen 210, respectively. For example, as shown in FIG. 4, a 3D image having a first depth may be displayed on the main screen 200, and a 3D image having a second depth may be displayed on the sub screen 210. Thus, the user can select images having his or her preferred depths while viewing the main screen 200 and the sub screen 210, so that the user can view a stereoscopic image having his or her preferred depth through a full screen.

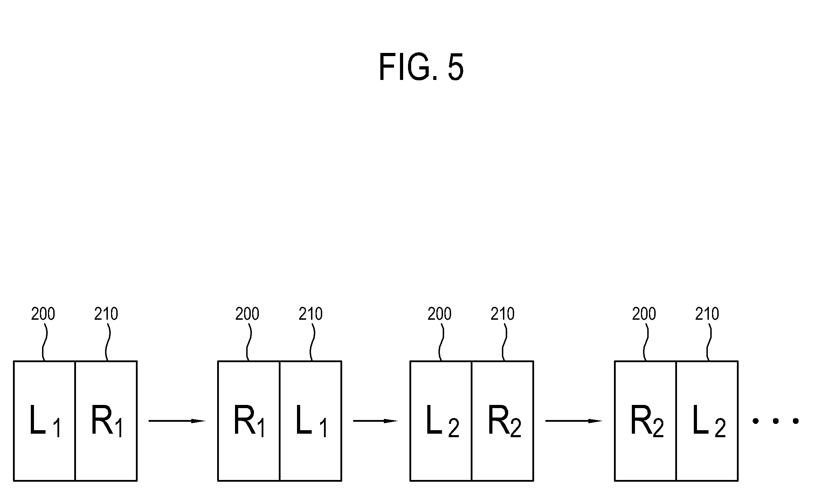

FIG. 5 illustrates a case that display orders of left-eye images and right-eye images in a main screen and a sub screen are different from each other, in the display apparatus 10 according to an exemplary embodiment. In the case that a user views a stereoscopic image through the shutter glasses, a left-eye shutter and a right-eye shutter of the shutter glasses are opened and closed in synchronization with a point of time when the left-eye image and the right-eye image are displayed in a screen of the display apparatus.

However, if the synchronization is not achieved, the user cannot view a definite stereoscopic image. Thus, in the display apparatus 10 according to the present exemplary embodiment, the user can adjust the synchronization of the shutter glasses to match the displayed images. For example, the left-eye images and the right-eye images are alternately displayed in the order of a first left-eye image L1, a first right-eye image R1, a second left-eye image L2, a second right-eye image, and so forth on the main screen 200, and are displayed in the order of the first right-eye image R1, the first left-eye image L1, the second right-eye image R2, the second left-eye image, and so forth on the sub screen 210. That is, the left-eye images and the right-eye images having the reverse display orders are simultaneously displayed on the main screen 200 and the sub screen 210, respectively.

The user may change the opening and closing order of the left-eye shutter and the right-eye shutter of the shutter glasses while viewing the main screen 200 and the sub screen 210. In this way, the user can synchronize the shutter glasses with the images displayed in the display apparatus 10.

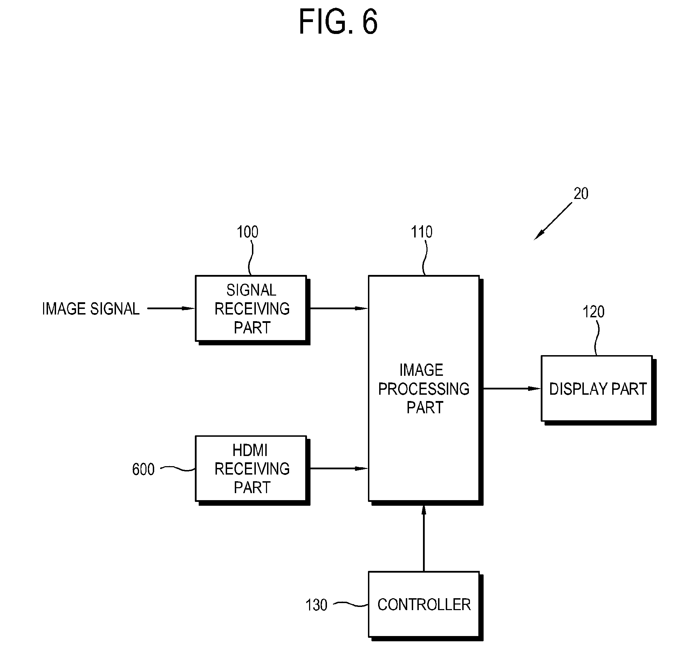

FIG. 6 illustrates a configuration of a display apparatus 20 according to another exemplary embodiment. Referring to FIG. 2, the display apparatus 20 includes a signal receiving part 100, a High Definition Multimedia Interface (HDMI) receiving part 600, an image processing part 110, a display part 120, and a controller 130.

The HDMI receiving part 600 receives an image signal from an external device such as a Blu-ray Disk (BD) player or a DVD player. For example, the image signal provided from the external device may be a 3D image signal transmitted by the HDMI 1.4 specification. In the case that the signal receiving part 100 receives a 2D image signal and the HDMI receiving part 600 receives a 3D image signal, the display apparatus 20 may simultaneously display a 2D image and a 3D image. In this case, the 2D image may be a broadcast image.

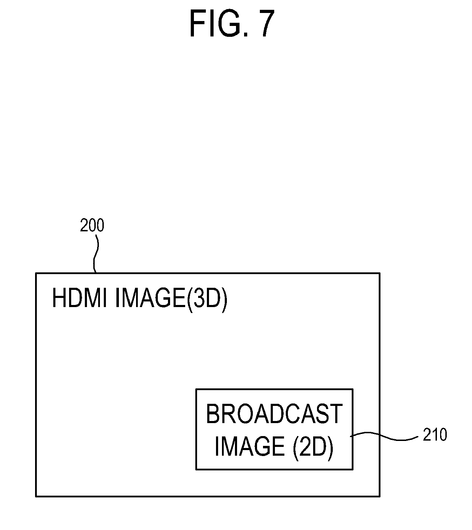

FIG. 7 illustrates a state that images are displayed in the display apparatus 20 according to an exemplary embodiment. If the HDMI receiving part 600 receives a 3D image signal from the external device such as a BD player, the controller 130 may perform a control so that a 3D image is displayed on a main screen 200. Furthermore, if the signal receiving part 100 receives a 2D image signal, the controller 130 may perform a control so that a 2D image is displayed on a sub screen 210. For example, even though a broadcast signal is a 2D image signal, if a 3D image signal is received from the external device, a 2D image and a 3D image can be simultaneously displayed.

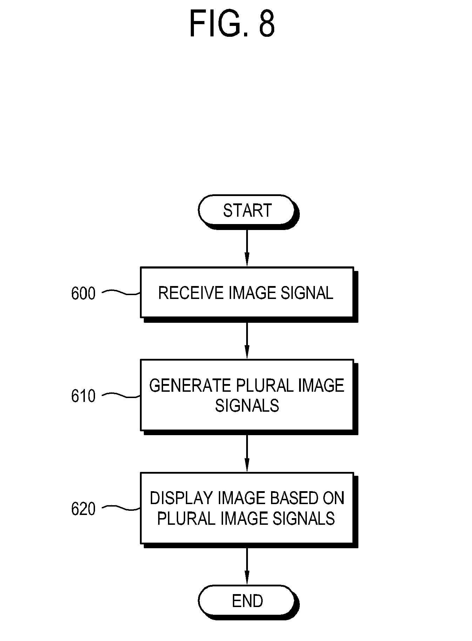

FIG. 8 is a flowchart illustrating an operational process of the display apparatus 10 according to an exemplary embodiment. Referring to FIG. 8, if the signal receiving part 100 receives one or more image signals which includes a 3D image signal (S600), the image processing part 110 processes the received image signal(s) to be displayed. In this respect, if one image signal is received, the image processing part 110 generates a plurality of image signals using the received image signal (S610). The plurality of generated image signals may include a 2D image signal and a 3D image signal. Then, the controller 130 controls the image processing part 110 to display images on the basis of the plurality of image signals (S630).

In this respect, for example, if the received image signal is a 2D image signal, images based on a converted 3D image signal and the 2D image signal may be displayed. Furthermore, if the received image signal is a 3D image signal, images based on a converted 2D image signal the 3D image signal may be displayed. Moreover, the 3D image may include a 3D image converted from a 2D image, a 3D image obtained by changing a display order of a left-eye image and a right-eye image, 3D images differing in depth information, or the like.

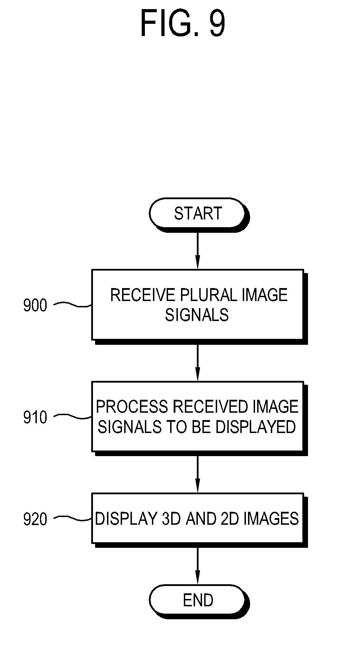

FIG. 9 is a flowchart illustrating an operational process of the display apparatus 20 according to another exemplary embodiment. Referring to FIG. 9, if the HDMI receiving part 600 receives a 3D image signal and the signal receiving part 100 receives a 2D image signal (S900), the image processing part 110 processes the received image signals to be displayed (S910). Then, the controller 130 performs a control so that a 3D image is displayed in a first region of a screen and a 2D image is displayed in a second region of the screen (S920). In this respect, the first region may be a main screen, and the second region may be a sub region, which may be displayed in a PIP form, a POP form, or the like.

While exemplary embodiments have been described as implemented by a display apparatus 10 or 20, it is noted that all embodiments are not limited thereto. For example, in another exemplary embodiment, an image processing apparatus (such as a set-top box or a general or special purpose computer) may process the image signals as described above to be output and displayed on two or more regions of a separate display apparatus. Furthermore, while exemplary embodiments have been described to display image signals on a main screen and a sub screen, it is understood that all embodiments are not limited thereto. For example, in another exemplary embodiment, a display part may display the image signals in more than two screens (e.g., one main screen and two or more sub screens).

While not restricted thereto, the exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, the exemplary embodiments may be written as computer programs transmitted over a computer-readable transmission medium, such as a carrier wave, and received and implemented in general-use digital computers that execute the programs. Moreover, while not required in all aspects, one or more units of the display apparatus 10 or 20 can include a processor or microprocessor executing a computer program stored in a computer-readable medium, such as a local storage.

Although a few exemplary embodiments have been shown and described, it will be appreciated by those skilled in the art that changes may be made in these exemplary embodiments without departing from the principles of the invention, the scope of which is defined in the appended claims.

## Claims

1. A display apparatus comprising:
a signal receiving part which receives a first image signal;
an image processing part which generates a second image signal and a third image signal based on the received first image signal, and which processes the generated second image signal and the generated third image signal to be displayed;
a display part which displays images respectively based on the second and the third image signals processed in the image processing part; and
a controller which controls the image processing part to generate the second and the third image signals, to display the image based on the second image signal in a first region of the display part, and to display the image based on the third image signal in a second region of the display part,
wherein the third image signal comprises a first left-eye image and a first right-eye image generated on the basis of the first image signal, and the image based on the third image signal is displayed in a three-dimensional (3D) mode.

2. The display apparatus according to claim 1, wherein, if the first image signal is a two-dimensional (2D) image signal, the controller controls the image processing part so that the first image signal is converted into 3D to generate the third image signal, and so that the image based on the second image signal is displayed in a 2D mode.

3. The display apparatus according to claim 1, wherein, if the first image signal is a 3D image signal including the first left-eye image and the first right-eye image, the controller controls the image processing part so that the second image signal is generated on the basis of the first left-eye image or the first right-eye image, and the image based on the second image signal is displayed in a 2D mode.

4. The display apparatus according to claim 1, wherein the controller controls the image processing part so that:
the second image signal comprises a second left-eye image and a second right-eye image;
the image based on the second image signal is displayed in the 3D mode; and
an alternating display order of the second left-eye image and the second right-eye image is opposite to an alternating display order of the first left-eye image and the first right-eye image.

5. The display apparatus according to claim 1, wherein the controller controls the image processing part so that:
the second image signal comprises a second left-eye image and a second right-eye image;
the image based on the second image signal is displayed in the 3D mode; and
the image based on the second image signal and the image based on the third image signal have different stereoscopic effects.

6. The display apparatus according to claim 5, wherein depth information corresponding to the second image signal is different from depth information corresponding to the third image signal.

7. The display apparatus according to claim 1, wherein the 3D mode corresponds to a viewing mode using shutter glasses or polarized glasses.

8. The display apparatus according to claim 1, wherein the controller controls the image processing part so that:
the second image signal comprises a second left-eye image and a second right-eye image;
the image based on the second image signal is displayed in the 3D mode;
the 3D mode of the image based on the second image signal corresponds to a glasses type viewable using 3D glasses; and
the 3D mode of the image based on the third image signal corresponds to a non-glasses type viewable without using 3D glasses.

9. The display apparatus according to claim 1, wherein the controller control the image processing part so that:
the second image signal comprises a second left-eye image and a second right-eye image;
the image based on the second image signal is displayed in the 3D mode;
the 3D mode of the image based on the second image signal corresponds to a viewing mode using shutter glasses; and
the 3D mode of the image based on the third image signal corresponds to a viewing mode using polarized glasses.

10. An image display method for a display apparatus, the method comprising:
receiving a first image signal;
generating a second image signal and a third image signal based on the received first image signal, and processing the generated second image signal and the generated third image signal to be displayed in a display part of the display apparatus; and
displaying an image based on the second image signal in a first region of the display part, and displaying an image based on the third image signal in a second region of the display part,
wherein the third image signal comprises a first left-eye image and a first right-eye image, and the image based on the third image signal is displayed in a three-dimensional (3D) mode.

11. The method according to claim 10, wherein, if the first image signal is a two-dimensional (2D) image signal:
the generating comprises converting the first image signal into 3D to generate the third image signal; and
the displaying comprises displaying the image based on the second image signal in a 2D mode and displaying the image based on the third image signal in the 3D mode.

12. The method according to claim 10, wherein if the first image signal is a 3D image signal comprising the first left-eye image and the first right-eye image:
the generating comprises generating the second image on the basis of the first left-eye image or the first right-eye image; and
the displaying comprises displaying the image based on the second image signal in a 2D mode.

13. The method according to claim 10, wherein:
the second image signal comprises a second left-eye image and a second right-eye image;
the displaying comprises displaying the image based on the second image signal in the 3D mode; and
an alternating display order of the second left-eye image and the second right-eye image is opposite to an alternating display order of the first left-eye image and the first right-eye image.

14. A display apparatus comprising:
a first signal receiving part which receives a first image signal;
a second signal receiving part which receives a second image signal;
an image processing part which processes the received first image signal and the received second image signal to be displayed;
a display part which displays first and second images respectively based on the first image signal and the second image signal processed in the image processing part; and
a controller which controls the image processing part to display the first image based on the first image signal in a first region of the display part and to display the second image based on the second image signal in a second region of the display part, wherein the first image is displayed in the first region in a 3D mode, and the processed first image signal comprises a left-eye image and a right-eye image.

15. An image display method for a display apparatus, the method comprising:
receiving a first image signal and a second image signal, the first image signal comprising a left-eye image and a right-eye image;
processing the received first image signal and the received second image signal to be displayed in a display part of the display apparatus; and
displaying an image based on the first image signal in a 3D mode in a first region of the display part, and displaying an image based on the second image signal in a second region of the display part.
